# EUROPÄISCHE PATENTSCHRIFT

(11) **EP 2 928 751 B1**
(45) Veröffentlichungstag und Bekanntmachung des Hinweises auf die Patenterteilung: **05.06.2019**
(21) Anmeldenummer: 14702504.3
(22) Anmeldetag: 27.01.2014
(51) Int. Cl.: B61F 5/50, G01M 17/10

(54) **VERFAHREN ZUM ERKENNEN EINES SCHWINGENS IN EINEM SCHIENENFAHRZEUG**
METHOD FOR DETECTING VIBRATION IN A RAIL VEHICLE
PROCÉDÉ DE DÉTECTION D'UNE VIBRATION DANS UN VÉHICULE FERROVIAIRE

(30) Priorität: 28.01.2013 DE 102013201289
(43) Veröffentlichungstag der Anmeldung: 14.10.2015
(73) Patentinhaber: Siemens Mobility GmbH, 81739 München (DE)
(72) Erfinder: HASSLER, Stefan, 91281 Kirchenthumbach (DE); RULKA, Wolfgang, 81241 München (DE); STÜTZLE, Thorsten, 90480 Nürnberg (DE)
(86) Internationale Anmeldenummer: PCT/EP2014/051505
(87) Internationale Veröffentlichungsnummer: WO 2014/114788

(56) Entgegenhaltungen:
- CN-A- 101 850 772
- DE-A1-102005 010 118
- DE-A1-102009 042 555
- DE-A1-102009 053 801
- DE-B4- 19 580 680

## Beschreibung

Die Erfindung betrifft ein Verfahren zum Erkennen eines rotatorischen Schwingens eines angetriebenen Achssystems eines Schienenfahrzeugs, bei dem ein Sensorsystem einen das Schwingen eines Elements des Achssystems anzeigenden Parameter erfasst und eine Auswerteeinheit ein Signal des Sensorsystems auswertet.

Beim Fahrbetrieb angetriebener Schienenfahrzeuge kann es zu einem Rattern einer oder mehrerer angetriebener Achsen kommen. Das Rattern tritt an solchen Fahrpunkten auf, an denen die Kennlinie des Kraftschlusses zwischen Rad und Schiene aufgetragen gegen den Schlupf mit wachsendem Schlupf abfallend ist, der Schlupf immer größer wird und die Radhaftung auf der Schiene abnimmt. Das Rattern ist also abhängig von der Strecke, da eine plötzlich glatter werdende Schiene eine Vergrößerung des Schlupfes und eine Verkleinerung des Kraftschlusses zwischen Rad und Schiene bewirkt, sodass ein Rattern bei ansonsten gleichen Fahrbedingungen plötzlich einsetzen kann. Um das Rattern zu beenden, muss der Fahrpunkt an eine flache Stelle oder den ansteigenden Bereich der Kennlinie zurückgeführt werden, das Antriebsmoment muss also reduziert werden.

Ein Verfahren zum Erkennen eines Schwingens eines Achssystems eines Schienenfahrzeugs wird in der DE 10 2005 010 118 A1 beschrieben.

Es ist eine Aufgabe der vorliegenden Erfindung, ein Verfahren zur Schwingungserkennung anzugeben, mit dem das Schwingen des angetriebenen Achssystems des Schienenfahrzeugs zuverlässig erkannt werden kann.

Diese Aufgabe wird durch ein Verfahren gemäss Anspruch 1 gelöst, bei dem das Sensorsystem erfindungsgemäß einen Bewegungssensor umfasst, der als Parameter eine als Drehung ausgeführte Bewegung des Elements erfasst, wobei das Element ein Teil eines Drehgestells des Schienenfahrzeugs ist, auf das eine Ratterbewegung der angetriebenen und ratternden Achse übertragen wird, wobei die als Drehung ausgeführte Bewegung eine Drehbewegung des Drehgestells ist.

Die Erfindung geht von der Überlegung aus, dass ein Rattern einer angetriebenen Achse in erster Linie durch eine Torsionsschwingung der Welle verursacht wird. Die beiden an der Welle befestigten Räder rutschen abwechselnd über die Schiene und bilden mit beiden Massen an der Welle entgegengesetzt schwingende Schwingkörper, sodass das Rattern mit einer großen Massebewegung verbunden ist. Dies führt nicht nur dazu, dass die auf die Welle wirkende Torsion unter Umständen sehr groß ist und die Welle mechanisch enorm belasten kann, sondern auch dazu, dass verbundene Elemente durch die Bewegung großer Massen stark schwingen. Insbesondere bewirkt ein solches Rattern Schwingungen hoher Amplitude, die zuverlässig durch einen Bewegungssensor erfasst werden können.

Zweckmäßigerweise wird das Schwingen als solches erkannt, sodass Gegenmaßnahmen ergriffen werden können, beispielsweise wird das Antriebsmoment der angetriebenen Welle verändert, insbesondere reduziert. Hierbei wird es vorteilhafterweise auf einen Fahrpunkt gelegt, an dem die Kennlinie des Kraftschlusses zwischen Rad und Schiene aufgetragen gegen den Schlupf mit dem Schlupf ansteigend oder nur flach abfallend ist.

Als eine Bewegung wird im Folgenden eine beliebige Ableitung des Orts über die Zeit verstanden, sodass eine Veränderung des Orts des Elements oder eines Teils davon, eine Beschleunigung des Elements oder eines Teils davon oder eine noch höhere Ableitung als Bewegung gesehen werden kann.

Vorteilhafterweise wird eine rhythmische Bewegung des Elements erfasst, sodass sich der Messzeitraum des Sensors über mehrere Perioden der Schwingung erstreckt und das Signal des Sensors auch über mehrere Schwingungsperioden ausgewertet wird.

Vorteilhafterweise ist das Schwingen ein durch Kraftschlusscharakteristiken von Rädern des angetriebenen Achssystems auf der Schiene hervorgerufenes Rattern. Das Erkennen eines solchen Schwingens ist besonders vorteilhaft, da durch das Rattern starke Materialbeeinträchtigungen bewirkt werden können, die durch das Erkennen vermieden werden können.

In einer vorteilhaften Ausführungsform der Erfindung umfasst das Sensorsystem einen Beschleunigungssensor, der als Parameter eine Beschleunigung des Elements erfasst. Die Beschleunigung kann eine Längsbeschleunigung, also eine translatorische Beschleunigung des Elements sein. Das Schwingen des Elements ist mit einer rhythmischen Beschleunigung des Elements oder eines Teils davon verbunden, die durch den Bewegungssensor erfasst werden kann. Zweckmäßigerweise ist der Sensor mit dem Element verbunden und schwingt selbst, dass auch das Schwingen des Sensors - oder allgemeiner gefasst, die Bewegung des Sensors - gemessen werden kann.

Weiter ist es vorteilhaft, wenn das Sensorsystem einen Rotationssensor umfasst, der als Parameter einen Winkel oder eine Winkelgeschwindigkeit des Elements erfasst. Die Bewegung ist hierbei insbesondere eine Drehbeschleunigung des Elements. Ein durch eine Torsionsschwingung der Welle verursachtes Rattern kann zu einer Drehbeschleunigung des Fahrgestells oder Drehgestells führen. Da eine Torsionsschwingung je nach Schwingungsphase mal das eine Rad nach vorne und das andere Rad nach hinten und dann das eine Rad nach hinten und das andere Rad nach vorne zieht, übt die ratternde Welle ein wechselndes Drehmoment um eine senkrechte Achse auf das angetriebene Achssystem und insbesondere das Drehgestell aus. Diese Schwingung kann durch einen Rotationssensor erfasst werden.

Eine weitere vorteilhafte Ausführungsform der Erfindung sieht vor, dass das Sensorsystem zumindest drei Beschleunigungssensoren umfasst, die als Parameter eine dreidimensionale Beschleunigung des Elements erfassen. Die dreidimensionale Beschleunigung kann eine Längsbeschleunigung oder eine Winkelbeschleunigung des Elements sein.

Vorteilhafterweise wird als Bewegung eine Dreh- beziehungsweise Winkelgeschwindigkeit des Elements erfasst. Hierfür weist das Sensorsystem zweckmäßigerweise drei Rotationssensoren auf, die ein Drehen dreidimensional erfassen. Zweckmäßigerweise wird eine Drehbewegung des Elements um die senkrechte Achse durch den Rotationssensor gemessen.

Um auch ein anfängliches Rattern bereits frühzeitig zu erkennen, ist es vorteilhaft, bereits geringe Schwingungen erfassen zu können. Dies kann auf einfache Weise erreicht werden, wenn das Sensorsystem einen Sensor eines Inertialnavigationssystems aufweist. Ein solches System enthält üblicherweise sehr feine Sensoren, die Beschleunigungen sowie Drehraten oder Winkelinkremente des Systems sehr fein erfassen und über die Zeit auswerten. Zudem sind Inertialnavigationssysteme vielseitig einsetzbar, wodurch sie mit relativ hoher Stückzahl hergestellt werden können und somit vergleichsweise preiswert sind. Ein Inertialnavigationssystem ist zweckmäßigerweise eine Einheit, die translatorische Beschleunigungssensoren und zweckmäßigerweise auch Rotationssensoren aufweist, wobei die Rotationssensoren ebenfalls beschleunigungssensitiv sein können und somit eine Winkelbeschleunigung messen können. Weiter umfasst ein Inertialnavigationssystem üblicherweise eine Auswerteeinheit, die die Signale der Sensoren erfasst und zu einem Ergebnis zusammenführt.

Das Element ist ein Teil eines Drehgestells des Schienenfahrzeugs, auf das eine Ratterbewegung der angetriebenen und ratternden Welle übertragen wird, insbesondere ein Motorgehäuse oder Getriebegehäuse. Ein Drehgestell eröffnet viele Möglichkeiten zur Anordnung des Sensorsystems, an denen das Rattern unterschiedlich ausgeprägt ist. Hierdurch kann das Rattern in gewünschter Weise gemessen und ausgewertet werden.

Das Schwingen einer angetriebenen Welle erfolgt in der Regel in einer Eigenfrequenz, wobei eine Eigenfrequenz einer kritischen Eigenschwingung bekannt ist. Einer zuverlässigen Erkennung der Schwingung ist es daher zuträglich, wenn für das Erkennen einer Schwingung irrelevante Signale des Sensors herausgefiltert werden. Hierzu schlägt die Erfindung vor, dass das Signal des Sensorsystems auf ein Frequenzband gefiltert wird, das um die Eigenschwingung der zu erkennenden Schwingung liegt. Besonders vorteilhaft ist das Filtern durch einen Haarnadelfilter. Ein solcher Filter legt ein sehr enges Band um die Eigenschwingungsfrequenz, sodass im Wesentlichen nur noch schwingungsrelevante Signale ausgewertet werden.

Ein durch eine Torsionsschwingung einer angetriebenen Welle verursachtes Rattern führt nicht nur zu einer Längsbeschleunigung des angetriebenen Systems, insbesondere des Drehgestells, in beziehungsweise gegen Fahrrichtung, sondern kann auch zu einer Drehbeschleunigung des angetriebenen Systems führen. Ein besonders zuverlässiges Erkennen eines solchen Ratterns ist möglich, wenn das Schwingen aus einer Längsbewegung und einer Drehbewegung des Elements erfasst wird. Es kann also das Signal eines Längsbeschleunigungssensors und eines Drehbeschleunigungssensors ausgewertet und die Auswertung in der Weise zusammengeführt werden, dass das gemeinsame Vorliegen der Längsbeschleunigung und Drehbeschleunigung erkannt wird, insbesondere in der gleichen Schwingungsfrequenz und weiter insbesondere in einer konstanten Phasenlage zueinander.

In einem angetriebenen Achssystem überlagern sich im Fahrbetrieb des Schienenfahrzeugs üblicherweise mehrere Schwingungen. Diese können von verschiedenen Bauteilen herrühren und unterschiedliche Ursachen haben. Hierbei bedingen oder beeinflussen sich die unterschiedlichen Schwingungen jedoch, sodass eine Schwingung noch eine andere hervorrufen kann. Es kann daher bei einem Vorliegen der einen Schwingung auf ein Vorliegen einer anderen Schwingung geschlossen werden. Die Schwingungen können unterschiedliche Frequenzen haben und aus einer Analyse des Frequenzspektrums kann auf mehrere Arten von Schwingen geschlossen werden. Hierzu ist das Signal des Sensors auf das Frequenzspektrum zu untersuchen.

Zuverlässiger ist es, wenn aus den Signalen mehrerer Bewegungssensoren auf eine von mehreren Arten von Schwingen geschlossen wird. Üblicherweise liegen unterschiedliche Schwingungen unterschiedlich stark an verschiedenen Orten des angetriebenen Achssystems vor. Sind mehrere Bewegungssensoren auf dem angetriebenen Achssystem verteilt, so kann nicht nur nach Frequenz, sondern auch nach Amplitude in Abhängigkeit vom Ort unterschieden werden. Hierdurch kann besonders zuverlässig auf mehrere Arten von Schwingen geschlossen werden beziehungsweise es kann herausgefunden werden, welches Schwingen aus einem Katalog mehrerer Schwingungsarten gerade vorliegt. Weiter ist es vorteilhaft, wenn aus den Signalen mehrerer Bewegungssensoren auf den Ursprungsort des Schwingens geschlossen wird. Die Bewegungssensoren sind hierbei zweckmäßigerweise außerhalb der geometrischen und zweckmäßigerweise auch außerhalb des Gewichtsschwerpunkts des Achssystems beziehungsweise des Drehgestells angeordnet. Werden die Sensorsignale auf Frequenz, Amplitude und insbesondere auch Phasenlage zueinander untersucht, so kann auf den Ursprungsort des Schwingens aufgrund von bekannten Schwingungseigenschaften geschlossen werden.

Gerade bei Torsionsschwingungen einer angetriebenen Welle wird das Drehgestell in starkem Maße auf seine Festigkeit beansprucht. Anders herum ist das Schwingen auch von der Festigkeit des Drehgestells abhängig. Hieraus kann gefolgert werden, dass ein Charakteristikum der Festigkeit des Drehgestells, oder allgemein gesprochen: des schwingenden Elements, aus der Frequenz und insbesondere des Frequenzspektrums des Schwingens erfasst werden kann. Hierdurch kann beispielsweise auf Materialermüdungen innerhalb des Drehgestells geschlossen werden.

Außerdem ist die Erfindung gerichtet auf ein Schienenfahrzeug gemäss Anspruch 10 mit einem angetriebenen Achssystem und einem Sensorsystem zum Erfassen eines das Schwingen eines Elements des Achssystems anzeigenden Parameters, das eine Auswerteeinheit zum Auswerten eines Signals des Sensorsystems aufweist.

Um das rotatorische Schwingen des angetriebenen Achssystems des Schienenfahrzeugs zuverlässig zu erkennen, wird vorgeschlagen, dass das Sensorsystem einen Bewegungssensor umfasst, der Parameter eine als Drehung ausgeführte Bewegung des Elements ist, wobei das Element ein Teil eines Drehgestells des Schienenfahrzeugs ist, auf das eine Ratterbewegung der angetriebenen und ratternden Achse übertragbar ist, wobei die als Drehung ausgeführte Bewegung eine Drehbewegung des Drehgestells ist.

Die bisher gegebene Beschreibung vorteilhafter Ausgestaltungen der Erfindung enthält zahlreiche Merkmale, die in den einzelnen Unteransprüchen teilweise zu mehreren zusammengefasst wiedergegeben sind. Diese Merkmale wird der Fachmann jedoch zweckmäßigerweise auch einzeln betrachten und zu sinnvollen weiteren Kombinationen zusammenfassen. Insbesondere sind diese Merkmale jeweils einzeln und in beliebiger geeigneter Kombination mit dem erfindungsgemäßen Verfahren und der erfindungsgemäßen Vorrichtung gemäß den unabhängigen Ansprüchen kombinierbar.

Die oben beschriebenen Eigenschaften, Merkmale und Vorteile dieser Erfindung, sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale.

Es zeigen:
- FIG 1: eine schematische Darstellung eines Schienenfahrzeugs mit einem angetriebenen Achssystem,
- FIG 2: ein Achssystem wie aus FIG 1, jedoch mit anderen Bewegungssensoren
- FIG 3: eine Kennlinie eines Kraftschlusses zwischen Rad und Schiene aufgetragen gegen den Schlupf.

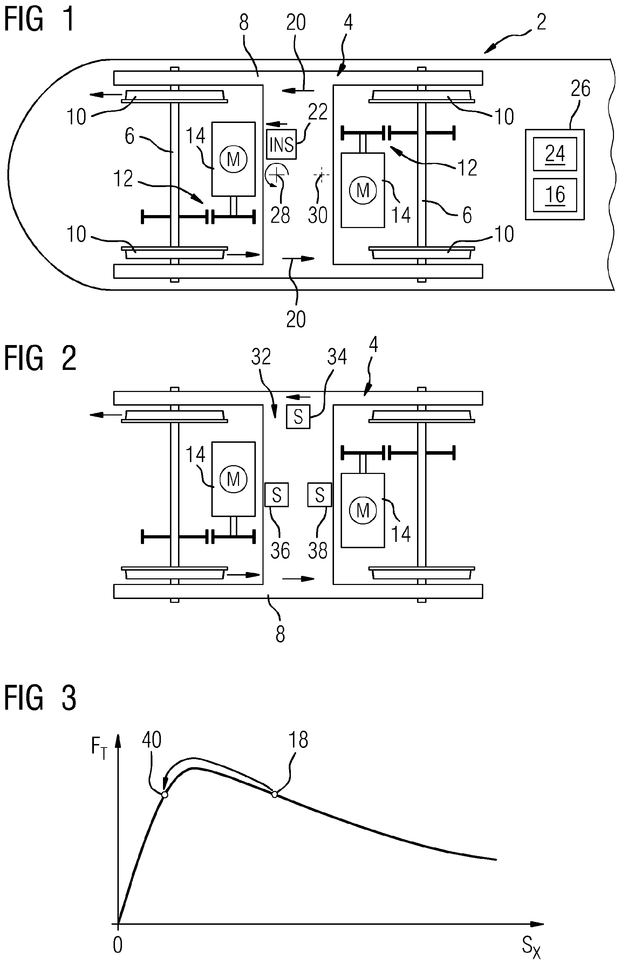

FIG 1 zeigt ein Schienenfahrzeug 2 ausschnittsweise und in einer schematischen Darstellung. Das Schienenfahrzeug 2 umfasst mehrere angetriebene Achssysteme 4, von denen in FIG 1 nur das vorderste dargestellt ist, das sich an der Spitze des Zuges befindet. Das angetriebene Achssystem 4 weist zwei angetriebene Achsen mit jeweils einer Welle 6 auf, die an einem Drehgestell 8 befestigt sind und jeweils zwei angetriebene Räder 10 haben. Jede der beiden Wellen 6 ist über ein Getriebe 12 mit einem Fahrmotor 14 verbunden, der von einer Steuereinheit 16 angesteuert wird und die Kraft zum Vortrieb des Schienenfahrzeugs 2 aufbringt.

Während des Fahrbetriebs des Schienenfahrzeugs 2 kann es vorkommen, dass das durch die beiden Fahrmotoren 14 auf die beiden Wellen 6 jeweils aufgebrachte Antriebsmoment so stark ist, dass der Kraftschluss F_{T} zwischen Rad 10 und nicht dargestellter Schiene mit wachsendem Schlupf abnimmt. Eine solche Situation ist in FIG 3 dargestellt.

FIG 3 zeigt den Kraftschluss F_{T} zwischen Rad 10 und Schiene aufgetragen gegen den Schlupf S_{X}. Wird der Fahrpunkt durch zu starkes Antriebsmoment auf den mit wachsendem Schlupf S_{X} abfallenden Bereich der Kennlinie verlegt, wie dies beispielweise durch einen Ratterpunkt 18 in FIG 3 angegeben ist, so neigen die Räder 10 dazu, durchzudrehen, Kraftübertragung auf die Schiene zu verlieren. Der Kraftschluss F_{T} schwankt entlang des abfallenden Breichs der Kennlinie rhythmisch und das angetriebene Achssystem 4 schwingt sich in seiner Eigenschwingung auf.

Dies ist beispielhaft in FIG 1 dargestellt, bei der die vordere Welle 6 des Achssystems 4 rattert. Das rechte Rad wird nach vorne gezogen und das linke Rad nach hinten. Durch die relativ starre Lagerung der Welle 6 im Drehgestell 8 können die Räder 10 nicht nach vorne und hinten ausweichen, sondern sich nur in einer Torsionsschwingung der Welle 6 aufschwingen. Die angetriebene Welle 6 fängt an sich aufzuschwingen, was sich in dem Rattern der Achse äußert.

Dieses Schwingen überträgt sich auf das gesamte Drehgestell 8, wie dies beispielhaft durch die Pfeile 20 in der Mitte des Drehgestells 8 angedeutet ist. Die Pfeile 20 geben nur ein beispielhaftes Schwingen wieder, wobei auch andere Formen mit anderen Schwingungsbewegungen und Verwindungen des Drehgestells 8 möglich sind.

Zum Erkennen eines solchen Schwingens ist das Schienenfahrzeug 2 mit einem Sensorsystem 22 ausgestattet, das in diesem Ausführungsbeispiel mehrere Sensoren umfasst. Das Sensorsystem 22 ist ein Inertialnavigationssystem (INS), das etwas abseits der geometrischen Mitte und des Gewichtsschwerpunkts des Drehgestells 8 an dem Drehgestell 8 befestigt ist. Das Sensorsystem 22 umfasst mehrere Bewegungssensoren, in diesem Ausführungsbeispiel drei Beschleunigungssensoren und drei Gyroskope, von denen die drei Beschleunigungssensoren zur Erfassung von translatorischer Beschleunigung in drei senkrecht zueinander stehenden Richtungen und die drei Gyroskopsensoren zur Erfassung von drei Rotationen oder Drehraten um die gleichen Achsen vorbereitet sind. Es kann somit eine dreidimensionale translatorische Beschleunigung und - nach Ableiten der Drehraten nach der Zeit - eine dreidimensionale rotatorische Beschleunigung erfasst werden. Das Sensorsystem 22 mit den Sensoren ist mit einer Auswerteeinheit 24 verbunden, die zusammen mit der Steuereinheit 16 in einem Steuermittel 26 integriert ist, das beispielsweise in einem Wagenkasten des Schienenfahrzeugs 2 angeordnet ist.

Bei einem Rattern der Achse tritt neben dem translatorischen Schwingen des Drehgestells 8, das durch die Pfeile 20 dargestellt ist, auch ein rotatorisches Schwingen um eine Rotationsachse 28 auf, wie dies durch den drehenden Pfeil um die Rotationsachse 28 in FIG 1 angedeutet ist. Das translatorische Schwingen ist eine Längsbewegung und das rotatorische Schwingen eine Drehbewegung des Drehgestells 8 oder eines Teils davon. Das bei einem Rattern auftretende Schwingen des Drehgestells 8 ist durch den drehenden Pfeil um die Rotationsachse 28 und die Pfeile 20 für das translatorische Schwingen der Anschaulichkeit halber nur sehr grob angegeben. In der Realität ist das Schwingen erheblich differenzierter, wobei bei einem Schwingen des Drehgestells 8 auch mehrere Schwingungsachsen um mehrere Rotationsachsen und in mehrere translatorische Richtungen auftreten kann.

Bei dem in FIG 1 dargestellten Ausführungsbeispiel misst das Sensorsystem 22 sowohl die rotatorische Schwingung um die senkrechte Rotationsachse 28 als auch die translatorische Schwingung, wie durch die Pfeile 20 angedeutet ist. Die translatorische Schwingung ist durch die relativ mittige Lage des Sensorsystems 22 im Drehgestell 8 zwar geringer als in äußeren Positionen, wie dies durch den kleineren geraden Pfeil nahe am Sensorsystem 22 angedeutet ist, jedoch ist durch die relativ zentrale Position des Sensorsystems 22 im Drehgestell 8 auch das rotatorische Schwingen zuverlässig messbar. Aus dem gemeinsamen Vorliegen von translatorischem und rotatorischem Schwingen erfasst die Auswerteeinheit 24 das Schwingen des angetriebenen Achssystems 4 als solches, beispielsweise als ein Rattern einer angetriebenen Achse.

Während dies bei einer einzelnen Schwingungsart nicht zwingend auf ein Rattern einer angetriebenen Achse zurückzuführen wäre, legt das gemeinsame Schwingen in einem vorbekannten Frequenzband das Rattern eindeutig fest. Das Frequenzband, außerhalb dessen die Sensorsignale des Sensorsystems 22 in der Auswerteeinheit 24 ausgefiltert werden, ist so gewählt, dass es eine oder mehrer Eigenschwingungen des Drehgestells 8, die für das Rattern charakteristisch sind, erfasst. Liegen die Eigenschwingungen in ihrer Frequenz auseinander, können auch mehrere Frequenzbänder erfasst werden. Hierzu umfasst die Auswerteeinheit 24 einen oder mehrere Frequenzfilter zum Ausblenden der Auswertung der Signale außerhalb des oder der vorbestimmten Frequenzbänder. Diese Filter sind Haarnadelfilter, die sehr scharf um die Eigenschwingungsfrequenz, beziehungsweise Eigenschwingungsfrequenzen, des Drehgestells 8 gelegt sind.

Je nachdem welche der angetriebenen Achsen rattert, liegt das Schwingungszentrum für ein rotatorisches Schwingen mal in der Rotationsachse 28 und mal in der Rotationsachse 30, die durch ein gestricheltes Kreuz in FIG 1 angedeutet und ebenfalls senkrecht ausgerichtet ist. Je nachdem, welche der beiden Achsen rattert, findet die rotatorische Schwingung mehr um die Rotationsachse 28 oder mehr um die Rotationsachse 30 statt. Um gut zwischen diesen beiden rotatorischen Schwingungen unterscheiden zu können, ist das Sensorsystem in einer unterschiedlichen Entfernung zu diesen beiden Rotationsachsen 28, 30 angeordnet. Je größer die Entfernung ist, desto mehr nimmt der rotatorische Anteil des Schwingens ab und der translatorische Anteil nimmt zu. Durch das gemeinsame Erfassen von rotatorischem und translatorischem Anteil des Schwingens kann das Sensorsystem 22 beziehungsweise die Auswerteeinheit 24 gut zwischen einem Schwingen um die Rotationsachse 28 oder um die Rotationsachse 30 und somit zwischen einem Rattern der vorderen 6 oder der hinteren Welle 6 des angetriebenen Achssystems 4 unterscheiden.

Je nachdem, wie stark welches Schwingen an welchem Ort des Drehgestells 8 auftritt, kann auf die Festigkeit des Drehgestells 8 und damit auf Materialermüdung tragender Teile des Drehgestells 8 geschlossen werden. Es wird insofern auf die Festigkeit des Drehgestells 8 oder eines oder mehrere Elemente davon, geschlossen.

Zu FIG 1 wurde die Schwingungserkennung durch die Auswerteeinheit 24 anhand des Ratterns einer angetriebenen Achse erläutert. Selbstverständlich ist die Schwingungserkennung nicht auf die Rattererkennung beschränkt, denn es können auch andere Schwingungen, verursacht durch andere Effekte, in analoger oder ähnlicher Weise erkannt werden. So können beispielsweise Gruppenantriebsschwingungen und/oder Drehmomentschwingungen des Motors aufgrund von Wicklungsfehlern im Stator erkannt werden. Insbesondere können die Schwingungen als solche erkannt werden, so dass also zwischen den einzelnen Schwingungen unterschieden werden kann.

FIG 2 zeigt das angetriebene Achssystem 4 alleine ohne das schematisch angedeutete Schienenfahrzeug 2, das dem Achssystem 4 aus FIG 1 gleicht. Unterschiedlich ist das Sensorsystem 32, das mehrere Sensoren 34, 36, 38 an verschiedenen Orten des Drehgestells 8 aufweist. Die Sensoren 34, 36, 38 können Einzelsensoren sein, beispielsweise ein Beschleunigungssensor 34 zum Erkennen eines translatorischen Beschleunigens und zwei Beschleunigungssensoren 36, 38 zum Erkennen jeweils eines rotatorischen Beschleunigens. In diesem Ausführungsbeispiel sind die beiden Sensoren 36, 38 an den Ort der Rotationsachsen 28, 30 gelegt, um die eine Ratterschwingung des angetriebenen Achssystems 4 rotatorisch schwingt. Selbstverständlich sind auch andere Orte an dem Drehgestell 8 zur Befestigung geeigneter Sensoren vorteilhaft, je nachdem welches Schwingen erkannt werden soll. Durch die drei verschiedenen Sensoren 34, 36, 38 kann zwischen dem translatorischen und dem rotatorischen Schwingen unterschieden werden und es kann auch unterschieden werden, um welche der beiden Rotationsachsen 28, 30 mehr rotatorisches Schwingen auftritt, also wie stark welche Achse rattert. Insofern wird aus den Signalen der mehreren Sensoren 34, 36, 38 des Sensorsystems 22, 32 auf den Ursprungsort des Schwingens geschlossen.

Wurde ein Rattern einer oder beider angetriebener Achsen erkannt, so steuert das Steuermittel 16 die Motoren 14 so, dass der Fahrpunkt der betroffenen angetriebenen Achse wieder auf den flachen Bereich um das Maximum oder den ansteigenden Bereich der in FIG 3 dargestellten Kennlinie zurückverlegt wird, also der Schlupf S_{X} reduziert wird. Dies ist in FIG 3 beispielhaft durch den eingezeichneten Pfeil angedeutet, durch den der Fahrpunkt vom Ratterpunkt 18 auf einen Antriebspunkt 40 zurückverlegt wird. Dies geschieht durch eine Drehmomentreduzierung des betroffenen Fahrmotors 14 in der Weise, dass die Räder 10 der betroffenen Welle 6 weniger Drehmoment auf die Schiene aufbringen und mehr mitrollen. Anschließend kann das Drehmoment wieder erhöht und somit der Kraftschluss zwischen Rad und Schiene gesteigert werden, bis der Antriebspunkt 40 erreicht ist.

In den FIGen 1 und 2 ist das Erkennen eines Schwingens des Schienenfahrzeugs 2 anhand des Schwingens eines angetriebenen Achssystems 4 dargestellt und erläutert. Es ist jedoch auch möglich, dass das Schwingen eines anderen Elements des Schienenfahrzeugs 2 erfasst wird, das auch außerhalb des angetriebenen Achssystems des Schienenfahrzeugs 2 liegen kann. Insofern ist die Erfindung anwendbar auf das Erkennen eines Schwingens eines Elements eines Schienenfahrzeugs 2 durch das Messen eines das Schwingen des Elements anzeigenden Parameters.

## Patentansprüche

1. Verfahren zum Erkennen eines rotatorischen Schwingens eines angetriebenen Achssystems (4) eines Schienenfahrzeugs (2), bei dem ein Sensorsystem (22, 32) einen das Schwingen eines Elements des Achssystems (4) anzeigenden Parameter erfasst und eine Auswerteeinheit (24) ein Signal des Sensorsystems (22, 32) auswertet,
**dadurch gekennzeichnet, dass** das Sensorsystem (22, 32) einen Bewegungssensor aufweist, der als Parameter eine als Drehung ausgeführte Bewegung des Elements erfasst, wobei das Element ein Teil eines Drehgestells (8) des Schienenfahrzeugs (2) ist, auf das eine Ratterbewegung der angetriebenen und ratternden Achse übertragen wird, wobei die als Drehung ausgeführte Bewegung eine Drehbewegung des Drehgestells (8) ist, wobei das Signal des Sensorsystems (22, 32) durch das Filtern durch einen Haarnadelfilter auf ein Frequenzband gefiltert wird, das um die Eigenschwingung des Schwingens liegt.

2. Verfahren nach Anspruch 1,
**dadurch gekennzeichnet, dass** das Sensorsystem (22, 32) zusätzlich einen Beschleunigungssensor umfasst, der als zusätzlichen Parameter eine Beschleunigung des Elements erfasst.

3. Verfahren nach Anspruch 1 oder 2,
**dadurch gekennzeichnet, dass** der Bewegungssensor als Rotationssensor ausgebildet ist.

4. Verfahren nach einem der vorhergehenden Ansprüche,
**dadurch gekennzeichnet, dass** das Sensorsystem (22, 32) einen Sensor eines Inertialnavigationssystems umfasst.

5. Verfahren nach einem der vorhergehenden Ansprüche, **dadurch gekennzeichnet, dass** das Schwingen aus einer Längsbewegung und einer Drehbewegung des Elements erfasst wird.

6. Verfahren nach einem der vorhergehenden Ansprüche, **dadurch gekennzeichnet, dass** aus den Signalen mehrerer Bewegungssensoren auf eine von mehreren Arten von Schwingen geschlossen wird.

7. Verfahren nach einem der vorhergehenden Ansprüche, **dadurch gekennzeichnet, dass** aus den Signalen mehrerer Bewegungssensoren auf den Ursprungsort des Schwingens geschlossen wird.

8. Verfahren nach einem der vorhergehenden Ansprüche, **dadurch gekennzeichnet, dass** aus den Sensordaten auf eine Festigkeit des Elements geschlossen wird.

9. Schienenfahrzeug (2) mit einem angetriebenen Achssystem (4) und einem Sensorsystem (22, 32) zum Erfassen eines das rotatorische Schwingen eines Elements des Achssystems (4) anzeigenden Parameters, das eine Auswerteeinheit (24) zum Auswerten eines Signals des Sensorsystems (22, 32) aufweist, **dadurch gekennzeichnet, dass** das Sensorsystem (22, 32) einen Bewegungssensor umfasst, der Parameter eine als Drehung ausgeführte Bewegung des Elements ist, wobei das Element ein Teil eines Drehgestells (8) des Schienenfahrzeugs (2) ist, auf das eine Ratterbewegung der angetriebenen und ratternden Achse übertragbar ist, wobei die als Drehung ausgeführte Bewegung eine Drehbewegung des Drehgestells (8) ist, und die Auswerteeinheit (24) zumindest einen Haarnadelfilter umfasst, durch den das Signal des Sensorsystems (22) auf ein Frequenzband gefiltert wird, das um die Eigenschwingung des Schwingens liegt.

## Claims

1. Method for detecting a rotational, vibration of a driven axle system (4) of a rail vehicle (2), with which a sensor system (22, 32) detects a parameter indicating the vibration of an element of the axle system (4) and an evaluating unit (24) evaluates a signal of the sensor system (22, 32),
**characterized in that** the sensor system (22, 32) comprises a motion sensor that detects a displacement of the element, which is carried out as a rotation, as a parameter, wherein the element is a part of a bogie (8) of the rail vehicle (2) to which a juddering motion of the driven and juddering axle is transferred, wherein the displacement that is carried out as a rotation is a rotary displacement of the bogie (8), wherein the signal of the sensor system (22, 32) is filtered by filtering through a hairpin filter to a frequency band that lies about the natural oscillation of the vibration.

2. Method according to Claim 1,
**characterized in that** the sensor system (22, 32) additionally comprises an acceleration sensor that detects an acceleration of the element as an additional parameter.

3. Method according to Claim 1 or 2,
**characterized in that** the motion sensor is in the form of a rotation sensor.

4. Method according to any one of the preceding claims, **characterized in that** the sensor system (22, 32) comprises a sensor of an inertial navigation system.

5. Method according to any one of the preceding claims, **characterized in that** the vibration is detected from a longitudinal displacement and a rotary displacement of the element.

6. Method according to any one of the preceding claims, **characterized in that** one of a plurality of types of vibration is concluded from the signals of a plurality of motion sensors.

7. Method according to any one of the preceding claims, **characterized in that** the place of origin of the vibration is concluded from the signals of a plurality of motion sensors.

8. Method according to any one of the preceding claims, **characterized in that** a strength of the element is concluded from the sensor data.

9. Rail vehicle (2) with a driven axle system (4) and a sensor system (22, 32) for the detection of a parameter indicating the rotatory vibration of an element of the axle system (4), which comprises an evaluating unit (24) for the evaluation of a signal of the sensor system (22, 32), **characterized in that** the sensor system (22, 32) comprises a motion sensor, the parameter is displacement of the element that is carried out as a rotation, wherein the element is a part of a bogie (8) of the rail vehicle (2) to which a juddering motion of the driven and juddering axle can be transferred, wherein the displacement that is carried out as a rotation is a rotary displacement of the bogie (8), and the evaluating unit (24) comprises at least one hairpin filter through which the signal of the sensor system (22) is filtered to a frequency band that lies about the natural oscillation of the vibration.

## Revendications

1. Procédé de détection d'une vibration de rotation d'un système (4) d'essieu entraîné d'un véhicule (2) ferroviaire, dans lequel un système (22, 32) de capteur détecte un paramètre indiquant la vibration d'un élément du système (4) d'essieu et une unité (24) d'exploitation exploite un signal du système (22, 32) de capteur, **caractérisé en ce que** le système (22, 32) de capteur a un capteur de mouvement, qui détecte, comme paramètre, un mouvement de l'élément réalisé sous la forme d'une rotation, l'élément étant une partie d'un boggie (8) du véhicule (2) ferroviaire à laquelle est transmis un mouvement de broutage de l'essieu entraîné et broutant, le mouvement exécuté en rotation étant un mouvement de rotation du boggie (8), dans lequel on filtre le signal du système (22, 32) de capteur par un filtre en épingle à cheveux sur une bande de fréquence, qui se trouve autour de l'oscillation propre de la vibration.

2. Procédé suivant la revendication 1,
**caractérisé en ce que** le système (22, 32) de capteur comprend, supplémentairement, un capteur d'accélération, qui détecte une accélération de l'élément comme paramètre supplémentaire.

3. Procédé suivant la revendication 1 ou 2,
**caractérisé en ce que** le capteur de mouvement est constitué en capteur de rotation.

4. Procédé suivant l'une des revendications précédentes,
**caractérisé en ce que** le système (22, 32) de capteur comprend un capteur d'un système de navigation par inertie.

5. Procédé suivant l'une des revendications précédentes,
**caractérisé en ce que** l'on détecte la vibration à partir d'un mouvement longitudinal et d'un mouvement de rotation de l'élément.

6. Procédé suivant l'une des revendications précédentes,
**caractérisé en ce que** l'on décide d'un parmi plusieurs types de vibration à partir des signaux de plusieurs capteurs de mouvement.

7. Procédé suivant l'une des revendications précédentes,
**caractérisé en ce que** l'on décide de l'emplacement d'origine de la vibration à partir des signaux de plusieurs capteurs de mouvement.

8. Procédé suivant l'une des revendications précédentes,
**caractérisé en ce que** l'on décide d'une rigidité de l'élément à partir des données de capteur.

9. Véhicule (2) ferroviaire ayant un système (4) d'essieu entraîné et un système (22, 32) de capteur, pour détecter un paramètre indiquant la vibration en rotation d'un élément du système (4) d'essieu, qui a une unité (24) d'exploitation pour exploiter un signal du système (22, 32) de capteur, **caractérisé en ce que** le paramètre comprend un mouvement de l'élément réalisé sous la forme d'une rotation, l'élément étant une partie d'un boggie (8) du véhicule (2) ferroviaire à laquelle est transmis un mouvement de broutage de l'essieu entraîné et broutant, le mouvement exécuté en rotation étant un mouvement de rotation du boggie (8), et l'unité (24) d'exploitation comprend au moins un filtre en épingle à cheveux par lequel on filtre le signal du système (22) de capteur sur une bande de fréquence, qui se trouve autour de l'oscillation propre de la vibration.
